# FASCICULE DE BREVET EUROPEEN

(11) **EP 2 147 622 B1**
(45) Date de publication et mention de la délivrance du brevet: **13.06.2012**
(21) Numéro de dépôt: 09356048.0
(22) Date de dépôt: 22.07.2009
(51) Int. Cl.: A47J 36/38

(54) **Couvercle d'appareil électroménager de cuisson comportant un sous-ensemble de filtration**
Deckel eines Elektro-Haushaltsgeräts zum Kochen, der eine Filteruntereinheit umfasst
Lid of an electrical kitchen appliance comprising a filtering sub-assembly

(30) Priorité: 25.07.2008 FR 0804238
(43) Date de publication de la demande: 27.01.2010
(73) Titulaire: SEB S.A., 69130 Ecully (FR)
(72) Inventeur: Bizard, Jean-Claude, 21121 Fontaine les Dijon (FR)
(74) Mandataire: Kiehl, Hubert

(56) Documents cités:
- EP-A- 0 343 141
- WO-A-03/064007

## Description

La présente invention concerne le domaine technique des appareils électroménagers de cuisson comportant une enceinte de cuisson comprenant une cuve et un couvercle.

La présente invention concerne plus particulièrement les couvercles comportant un sous-ensemble de filtration des vapeurs de cuisson issues de la cuve et un joint d'étanchéité.

Il est connu du document WO 03/064007 un couvercle d'appareil électroménager de cuisson comportant un conduit d'évacuation des vapeurs de cuisson reliant une face inférieure à une face extérieure, et un sous-ensemble de filtration amovible traversant le conduit d'évacuation des vapeurs de cuisson, dans lequel la face inférieure porte un joint d'étanchéité entourant une entrée du conduit d'évacuation des vapeurs de cuisson. Toutefois dans la construction proposée, le sous-ensemble de filtration est engagé dans l'entrée du conduit d'évacuation des vapeurs de cuisson. Cette disposition présente l'inconvénient d'exposer les moyens de préhension du sous-ensemble de filtration aux vapeurs de cuisson. L'utilisateur voulant retirer le sous-ensemble de filtration après une cuisson risque d'être gêné par la présence de dépôts sur les moyens de préhension. Dans le cas de friteuses ces dépôts sont gras, ce qui rend la manipulation des moyens de préhension peu aisée.

Un objet de la présente invention est d'améliorer l'ergonomie d'un couvercle d'appareil électroménager de cuisson du type précité.

Un autre objet de la présente invention est d'améliorer l'efficacité de filtration d'un couvercle d'appareil électroménager de cuisson du type précité.

Un autre objet de la présente invention est d'améliorer l'ergonomie d'un appareil électroménager de cuisson du type précité.

Un autre objet de la présente invention est d'améliorer l'efficacité de filtration d'un appareil électroménager de cuisson du type précité.

Ces objets sont atteints avec un couvercle d'appareil électroménager de cuisson comportant un conduit d'évacuation des vapeurs de cuisson reliant une face inférieure à une face extérieure, la face inférieure portant un joint d'étanchéité entourant une entrée du conduit d'évacuation des vapeurs de cuisson, un sous-ensemble de filtration amovible traversant le conduit d'évacuation des vapeurs de cuisson, du fait que le sous-ensemble de filtration est monté dans une ouverture de la face inférieure en périphérie extérieure du joint d'étanchéité. Cette disposition permet de disposer la zone de préhension du sous-ensemble de filtration à l'écart des vapeurs de cuisson. Cette disposition permet aussi d'obtenir une face extérieure du couvercle dépourvue d'éléments amovibles, facilitant ainsi le nettoyage de ladite face extérieure.

Avantageusement le conduit d'évacuation des vapeurs de cuisson débouche dans une paroi latérale de la face inférieure. Cette disposition permet de réduire la hauteur du couvercle.

Avantageusement encore, la face inférieure présente une paroi inférieure inclinée s'élevant vers la paroi latérale. Cette disposition permet de favoriser l'évacuation des vapeurs de cuisson.

Avantageusement encore, pour un meilleur confort d'utilisation, le couvercle comporte une fenêtre de visualisation.

Avantageusement alors, la paroi inférieure inclinée est formée par la fenêtre de visualisation. Cette disposition contribue à réduire les dépôts issus des vapeurs de cuisson sur la fenêtre de visualisation.

Avantageusement encore, le sous-ensemble de filtration présente une forme incurvée. Cette disposition permet de réduire l'encombrement du couvercle tout en autorisant une surface de filtration importante facilitant l'extraction des vapeurs de cuisson.

Avantageusement alors, le sous-ensemble de filtration présente une section incurvée vers une partie centrale du couvercle à partir de l'ouverture de la face inférieure. Cette disposition permet de réduire encore la hauteur du couvercle tout en conservation une bonne efficacité de filtration. Cette disposition permet également de faciliter le retrait du sous-ensemble de filtration lorsque le couvercle est monté pivotant.

Avantageusement encore, pour une meilleure sécurité d'utilisation, le couvercle présente une butée prévue pour coopérer avec un organe de retenue du sous-ensemble de filtration.

Avantageusement alors, l'organe de retenue est agencé sur une partie déformable du sous-ensemble de filtration. Cette disposition permet de simplifier la construction du couvercle en évitant la réalisation de parties déformables.

Avantageusement encore, le sous-ensemble de filtration présente un filtre agencé dans un porte-filtre. Cette disposition permet de rendre plus économique le renouvellement du filtre.

Avantageusement alors, l'organe de retenue est ménagé sur le porte-filtre. Cette disposition permet de simplifier la réalisation du filtre.

Ces objets sont également atteint avec un appareil électroménager de cuisson, notamment une friteuse électrique, comportant une cuve et un couvercle, dans lequel le couvercle est conforme à l'une au moins des caractéristiques précédentes et dans lequel le joint d'étanchéité est prévu pour coopérer avec un bord supérieur de la cuve.

Selon une construction avantageuse, la cuve est agencée dans un boîtier. Cette disposition permet de disposer la zone de préhension du sous-ensemble de filtration dans une partie du couvercle non accessible lorsque le couvercle est disposé sur la cuve.

Selon une construction préférée, le couvercle est monté pivotant sur le boîtier.

Avantageusement alors, le couvercle comporte deux organes de pivotement et l'ouverture est agencée entre les deux organes de pivotement. Ainsi le sous-ensemble de filtration est monté entre les deux organes de pivotement. Cette disposition permet de réduire l'encombrement du couvercle tout en facilitant l'accès au sous-ensemble de filtration. De plus cette disposition contribue à une meilleure visualisation par une fenêtre de visualisation inclinée.

L'invention sera mieux comprise à l'étude d'un exemple de réalisation, pris à titre nullement limitatif, illustré dans les figures annexées, dans lesquelles :
- la figure 1 est une vue en coupe transversale d'un appareil électroménager de cuisson comportant un couvercle selon l'invention, dans lequel le sous-ensemble de filtration a été retiré du couvercle.
- la figure 2 est une vue en coupe longitudinale du couvercle illustré sur la figure 1, le sous-ensemble de filtration étant en place dans le couvercle.
- la figure 3 est une vue en perspective du sous-ensemble de filtration monté dans le couvercle illustré sur la figure 2,
- la figure 4 est une vue en perspective d'un porte-filtre du sous-ensemble de filtration illustré sur la figure 3,
- la figure 5 est une vue en perspective d'un filtre du sous-ensemble de filtration illustré sur la figure 3, prévu pour être monté dans le porte-filtre illustré sur la figure 4,
- la figure 6 est une vue en perspective de dessous du couvercle illustré sur les figures 1 et 2, montrant l'entrée du conduit d'évacuation des vapeurs de cuisson en l'absence du sous-ensemble de filtration.
- la figure 7 est une vue partielle en coupe montrant l'articulation du couvercle sur un boîtier de l'appareil électroménager de cuisson illustré sur la figure 1,
- la figure 8 est une vue partielle en perspective de dessous du couvercle illustré sur les figures 1, 2 et 8, montrant le montage du porte-filtre illustré sur la figure 4.

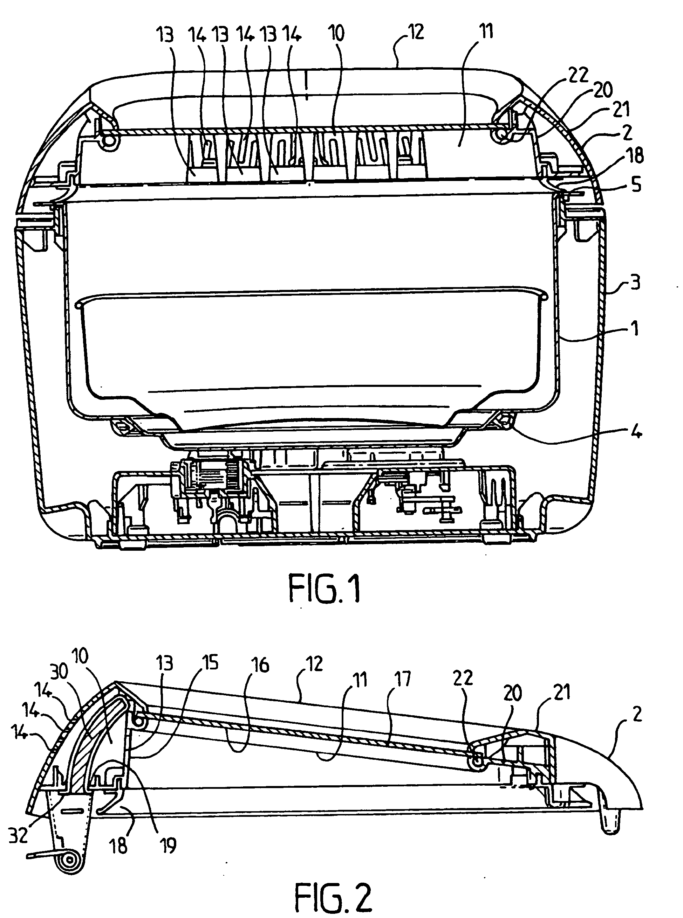

L'appareil électroménager de cuisson illustré sur la figure 1 comporte une cuve 1 et un couvercle 2. La cuve 1 est agencée dans un boîtier 3. Le couvercle 2 est avantageusement monté amovible par rapport au boîtier 3. La cuve 1 est associée à des moyens de chauffe 4. L'appareil électroménager de cuisson illustré sur la figure 1 est par exemple une friteuse électrique.

Tel que visible sur les figures 1 et 2, le couvercle 2 comporte une face inférieure 11 ainsi qu'une face extérieure 12. La face inférieure 11 est prévue pour couvrir la cuve 1. Le couvercle 2 comporte un conduit d'évacuation des vapeurs de cuisson 10 reliant la face inférieure 11 à la face extérieure 12. A cet effet la face inférieure 11 comporte des passages 13 conduisant à des évents 14 ménagés dans la face extérieure 12. Les passages 13 forment une entrée du conduit d'évacuation des vapeurs de cuisson. Les évents 14 forment une sortie du conduit d'évacuation des vapeurs de cuisson 10. La face inférieure 11 du couvercle 2 est disposée en regard de la cuve 1.

Selon une forme de réalisation avantageuse, le conduit d'évacuation des vapeurs de cuisson 10 débouche dans une paroi latérale 15 de la face inférieure 11 du couvercle 2. La face inférieure 11 du couvercle 2 présente une paroi inférieure inclinée 16 s'élevant vers la paroi latérale 15. Le couvercle 2 comporte une fenêtre de visualisation 17. La fenêtre de visualisation 17 est avantageusement réalisée en verre. La fenêtre de visualisation 17 est montée entre un cadre inférieur 20 et un capot supérieur 21. Un joint tubulaire 22 est avantageusement monté entre le cadre inférieur 20 et la fenêtre de visualisation 17. La paroi inférieure inclinée 16 est formée par la fenêtre de visualisation 17.

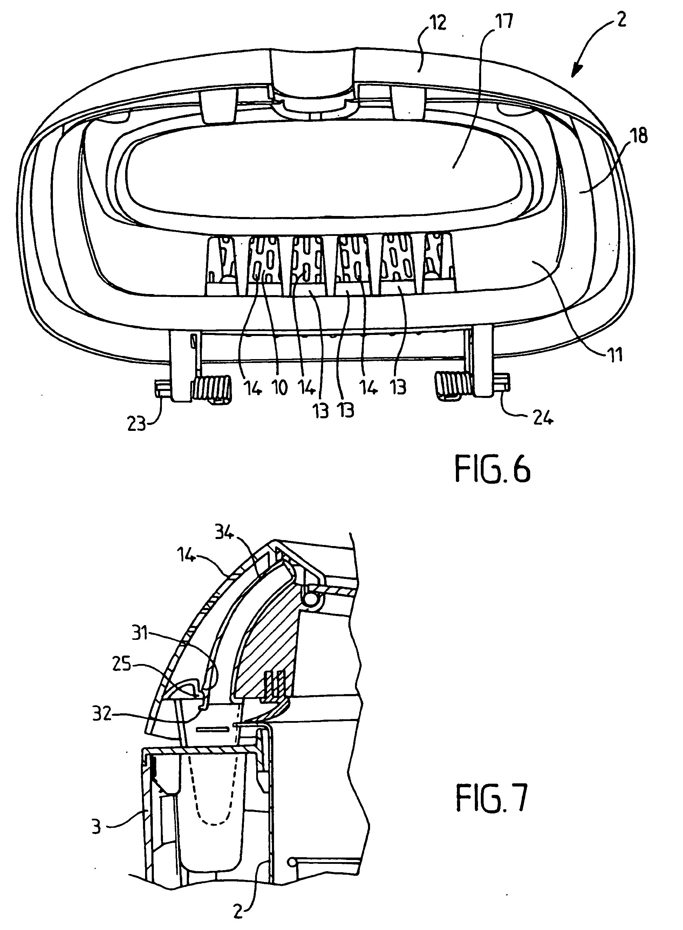

La face inférieure 11 du couvercle 2 porte un joint d'étanchéité 18 entourant l'entrée du conduit d'évacuation des vapeurs de cuisson 10. Le joint d'étanchéité 18 est avantageusement annulaire. Le joint d'étanchéité 18 est prévu pour coopérer avec un bord supérieur 5 de la cuve 1, tel que visible sur la figure 1. Les passages 13 sont entourés par le joint d'étanchéité 18, tel que visible sur la figure 6.

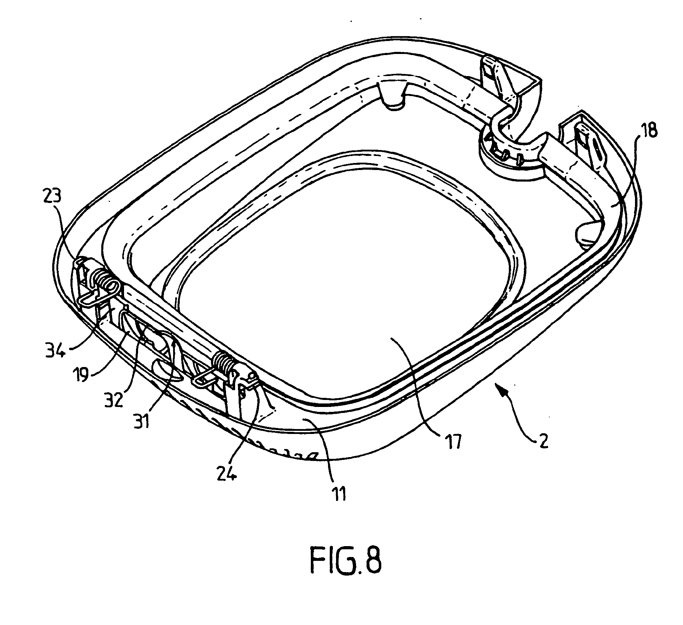

Le couvercle 2 comporte un sous-ensemble de filtration 30 amovible traversant le conduit d'évacuation des vapeurs de cuisson 10. Le sous-ensemble de filtration 30 est monté dans une ouverture 19 de la face inférieure 11 en périphérie extérieure du joint d'étanchéité 18, tel que visible sur les figures 2 et 8.

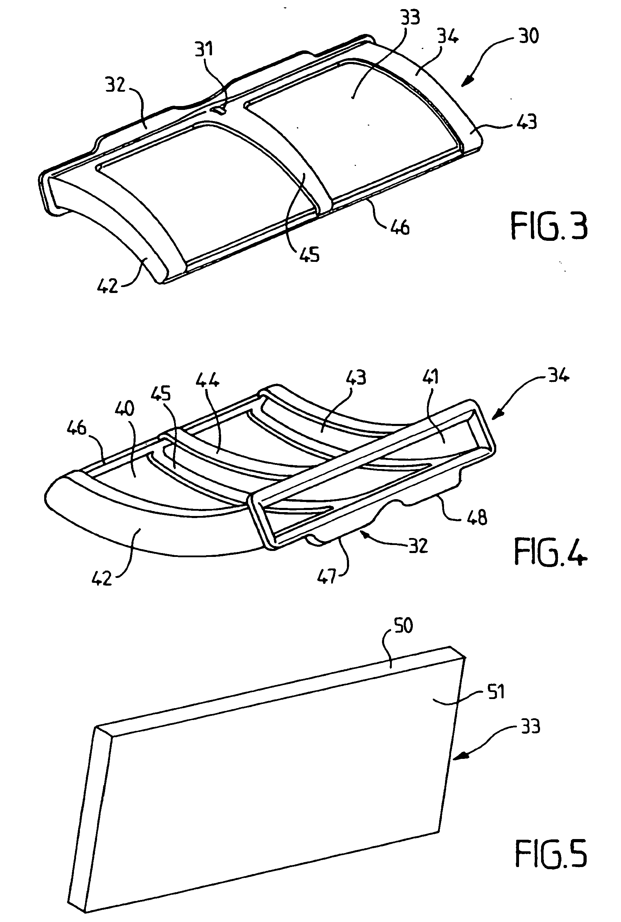

Plus particulièrement, le sous-ensemble de filtration 30 présente une forme incurvée, tel que mieux visible sur la figure 3. Tel que montré sur la figure 2, le sous-ensemble de filtration 30 présente une section incurvée vers une partie centrale du couvercle 2 à partir de l'ouverture 19 de la face inférieure 11. Le couvercle 2 présente une butée 25 prévue pour coopérer avec un organe de retenue 31 du sous-ensemble de filtration 30. L'organe de retenue 31 est avantageusement agencé sur une partie déformable du sous-ensemble de filtration 30. Le sous-ensemble de filtration 30 présente un organe de préhension 32 prévu pour faciliter l'extraction du sous-ensemble de filtration 30.

De manière avantageuse, le sous-ensemble de filtration 30 présente un filtre 33 agencé dans un porte-filtre 34.

Le porte-filtre 34 montré sur la figure 4 définit un logement 40 prévu pour recevoir le filtre 33. A cet effet, le porte-filtre 34 présente une embouchure 41 prévue pour l'introduction du filtre 33 dans le logement 40. Le porte-filtre 34 présente deux montants latéraux 42, 43 présentant une section en U prévue pour recevoir les bords du filtre 33. Le porte-filtre 34 présente deux montants centraux 44, 45 disposés de part et d'autre du logement 40. Les montants centraux 44, 45 se rejoignent à l'opposé de l'embouchure 41 et sont raccordés aux montants latéraux 42, 43 par une traverse 46. Le porte-filtre 34 est par exemple réalisé en PBT. L'organe de retenue 31 est ménagé sur le porte-filtre 34, tel que mieux visible sur les figures 3 et 7. L'organe de préhension 32 est formé par deux languettes 47, 48 disposées à l'extérieur de l'embouchure 41.

Le filtre 33 illustré sur la figure 5 présente avantageusement une couche amont 50 anti-graisse, réalisée par exemple en polyester non tissé, et une couche aval 51 anti-odeurs, incorporant du charbon actif. L'épaisseur de la couche amont 50 peut être supérieure à l'épaisseur de la couche aval 51. Le filtre 33 est flexible et peut être inséré sans difficultés dans le logement 40 du porte-filtre 34 par l'embouchure 41.

Selon la forme de réalisation préférée illustrée aux figures, le couvercle 2 est monté pivotant sur le boîtier 3. A cet effet, le couvercle 2 comporte deux organes de pivotement 23, 24, mieux visibles sur les figures 6 et 8. Les deux organes de pivotement 23, 24 sont agencés en périphérie extérieure du joint d'étanchéité 18. Tel que visible sur la figure 8, l'ouverture 19 est agencée entre les deux organes de pivotement 23, 24. Ainsi le sous-ensemble de filtration 30 est monté entre les deux organes de pivotement 23, 24.

La présente invention fonctionne et s'utilise de la manière suivante. L'utilisateur assemble le sous-ensemble de filtration 30 en insérant le filtre 33 dans le logement 40 du porte-filtre 34, la couche aval 51 anti-odeurs étant disposée du côté de l'organe de préhension 32. L'utilisateur met ensuite le sous-ensemble de filtration 30 en place dans l'ouverture 19 de la face inférieure 11 du couvercle 2. La forme incurvée du sous-ensemble de filtration 30 permet la mise en place du sous-ensemble de filtration 30 lorsque le couvercle 2 est relevé par rapport au boîtier 3. L'agencement du sous-ensemble de filtration 30 en périphérie extérieure du joint d'étanchéité 18 permet d'éviter que les vapeurs de cuisson issues de la cuve 1 atteignent l'organe de préhension 32.

Le couvercle 2 selon l'invention peut être utilisé avec tout appareil électroménager de cuisson comportant une cuve et un couvercle, tel que par exemple une friteuse, un cuiseur à riz ou encore un cuiseur multi-fonctions.

A titre de variante, le sous-ensemble de filtration 30 n'est pas nécessairement agencé entre les organes de pivotement 23, 24.

A titre de variante, le sous-ensemble de filtration 30 n'est pas nécessairement agencé du côté des organes de pivotement 23, 24.

A titre de variante, le couvercle 2 n'est pas nécessairement monté pivotant.

La présente invention n'est nullement limitée à l'exemple de réalisation décrit et à ses variantes, mais englobe de nombreuses modifications dans le cadre des revendications.

## Revendications

1. Couvercle (2) d'appareil électroménager de cuisson comportant un conduit d'évacuation des vapeurs de cuisson (10) reliant une face inférieure (11) à une face extérieure (12), la face inférieure (11) portant un joint d'étanchéité (18) entourant une entrée du conduit d'évacuation des vapeurs de cuisson (10), un sous-ensemble de filtration (30) amovible traversant le conduit d'évacuation des vapeurs de cuisson (10), **caractérisé en ce que** le sous-ensemble de filtration (30) est monté dans une ouverture (19) de la face inférieure (11) en périphérie extérieure du joint d'étanchéité (18).

2. Couvercle (2) selon la revendication 1, **caractérisé en ce que** le conduit d'évacuation des vapeurs de cuisson (10) débouche dans une paroi latérale (15) de la face inférieure (11).

3. Couvercle (2) selon l'une des revendications 1 ou 2, **caractérisé en ce que** la face inférieure (11) présente une paroi inférieure inclinée (16) s'élevant vers la paroi latérale (15).

4. Couvercle (2) selon l'une des revendications 1 à 3, **caractérisé en ce qu'**il comporte une fenêtre de visualisation (17).

5. Couvercle (2) selon les revendications 3 et 4, **caractérisé en ce que** la paroi inférieure inclinée (16) est formée par la fenêtre de visualisation (17).

6. Couvercle (2) selon l'une des revendications 1 à 5, **caractérisé en ce que** le sous-ensemble de filtration (30) présente une forme incurvée.

7. Couvercle (2) selon la revendication 6, **caractérisé en ce que** le sous-ensemble de filtration (30) présente une section incurvée vers une partie centrale du couvercle (2) à partir de l'ouverture (19) de la face inférieure (11).

8. Couvercle (2) selon l'une des revendications 1 à 7, **caractérisé en ce qu'**il présente une butée (25) prévue pour coopérer avec un organe de retenue (31) du sous-ensemble de filtration (30).

9. Couvercle (2) selon la revendication 8, **caractérisé en ce que** l'organe de retenue (31) est agencé sur une partie déformable du sous-ensemble de filtration (30).

10. Couvercle (2) selon l'une des revendications 1 à 9, **caractérisé en ce que** le sous-ensemble de filtration (30) présente un filtre (33) agencé dans un porte-filtre (34).

11. Couvercle (2) selon l'une des revendications 8 et 9 et la revendication 10, **caractérisé en ce que** l'organe de retenue (31) est ménagé sur le porte-filtre (34).

12. Appareil électroménager de cuisson, notamment friteuse électrique, comportant une cuve (1) et un couvercle (2), **caractérisé en ce que** le couvercle (2) est conforme à l'une au moins des revendications 1 à 11 et **en ce que** le joint d'étanchéité (18) est prévu pour coopérer avec un bord supérieur (5) de la cuve (1).

13. Appareil électroménager de cuisson selon la revendication 12, **caractérisé en ce que** la cuve (1) est agencée dans un boîtier (3).

14. Appareil électroménager de cuisson selon la revendication 13, **caractérisé en ce que** le couvercle (2) est monté pivotant sur le boîtier (3).

15. Appareil électroménager de cuisson selon la revendication 14, **caractérisé en ce que** le couvercle (2) comporte deux organes de pivotement (23, 24) et **en ce que** l'ouverture (19) est agencée entre les deux organes de pivotement (23, 24).

## Claims

1. A lid (2) for a household electric cooking appliance containing a cooking steam discharge pipe (10) connecting a lower face (11) with an outer face (12), the lower face (11) bearing a seal (18) surrounding an inlet of the cooking steam discharge pipe (10), a removable filtration subassembly (30) passing through the cooking steam discharge pipe (10), **characterised in that** the filtration subassembly (30) is mounted in an opening (19) of the lower face (11) on the outer periphery of the seal (18).

2. A lid (2) according to claim 1, **characterised in that** the cooking steam discharge pipe (10) opens into a side wall (15) of the lower face (11).

3. A lid (2) according to one of claims 1 or 2, **characterised in that** the lower face (11) has an inclined lower wall (16) rising towards the side wall (15).

4. A lid (2) according to one of claims 1 to 3, **characterised in that** it comprises a viewing window (17).

5. A lid (2) according to claims 3 and 4, **characterised in that** the inclined lower wall (16) is formed by the viewing window (17).

6. A lid (2) according to one of claims 1 to 5, **characterised in that** the filtration subassembly (30) has a curved shape.

7. A lid (2) according to claim 6, **characterised in that** the filtration subassembly (30) has a section curved towards a central part of the lid (2) from the opening (19) of the lower face (11).

8. A lid (2) according to one of claims 1 to 7, **characterised in that** it has a stop member (25) that interacts with a retaining member (31) of the filtration subassembly (30).

9. A lid (2) according to claim 8, **characterised in that** the retaining member (31) is arranged on a deformable part of the filtration subassembly (30).

10. A lid (2) according to one of claims 1 to 9, **characterised in that** the filtration subassembly (30) has a filter (33) arranged in a filter holder (34).

11. A lid (2) according to one of claims 8 and 9 and claim 10, **characterised in that** the retaining member (31) is located on the filter holder (34).

12. A household electric cooking appliance, in particular an electric deep fryer, containing a vessel (1) and a lid (2), **characterised in that** the lid (2) conforms to at least one of claims 1 to 11 and **in that** the seal (18) is designed to interact with an upper edge (5) of the vessel (1).

13. A household electric cooking appliance according to claim 12, **characterised in that** the vessel (1) is arranged inside a housing (3).

14. A household electric cooking appliance according to claim 13, **characterised in that** the lid (2) is mounted pivotally on the housing (3).

15. A household electric cooking appliance according to claim 14, **characterised in that** the lid (2) contains two pivot members (23, 24) and **in that** the opening (19) is provided between the two pivot members (23, 24).

## Patentansprüche

1. Deckel (2) eines Elektrohaushaltsgerätes zum Garen, umfassend einen Abführkanal für Gardämpfe (10), der eine Unterseite (11) mit einer Außenseite (12) verbindet, wobei die Unterseite (11) eine Dichtung trägt (18), die einen Eingang des Abführkanals für Gardämpfe (10) umgibt, wobei eine herausnehmbare Filteranordnung (30) durch den Abführkanal für Gardämpfe (10) hindurch verläuft, **dadurch gekennzeichnet, dass** die Filteranordnung (30) in einer Öffnung (19) der Unterseite (11) am äußeren Rand der Dichtung (18) angebracht ist.

2. Deckel (2) nach Anspruch 1, **dadurch gekennzeichnet, dass** der Abführkanal für Gardämpfe (10) in eine Seitenwand (15) der Unterseite (11) mündet.

3. Deckel (2) nach einem der Ansprüche 1 oder 2, **dadurch gekennzeichnet, dass** die Unterseite (11) eine schräge untere Wand (16) aufweist, die zur Seitenwand (15) hin ansteigt.

4. Deckel (2) nach einem der Ansprüche 1 bis 3, **dadurch gekennzeichnet, dass** er ein Sichtfenster (17) umfasst.

5. Deckel (2) nach Anspruch 3 und 4, **dadurch gekennzeichnet, dass** die schräge untere Wand (16) vom Sichtfenster (17) gebildet wird.

6. Deckel (2) nach einem der Ansprüche 1 bis 5, **dadurch gekennzeichnet, dass** die Filteranordnung (30) eine gekrümmte Form aufweist.

7. Deckel (2) nach Anspruch 6, **dadurch gekennzeichnet, dass** die Filteranordnung (30) einen Querschnitt aufweist, der zu einem Mittelteil des Deckels (2) ausgehend von der Öffnung (19) der Unterseite (11) hin gekrümmt ist.

8. Deckel (2) nach einem der Ansprüche 1 bis 7, **dadurch gekennzeichnet, dass** er einen Anschlag (25) aufweist, der vorgesehen ist, um mit einem Rückhalteglied (31) der Filteranordnung (30) zusammenzuwirken.

9. Deckel (2) nach Anspruch 8, **dadurch gekennzeichnet, dass** das Rückhalteglied (31) auf einem verformbaren Teil der Filteranordnung (30) angeordnet ist.

10. Deckel (2) nach einem der Ansprüche 1 bis 9, **dadurch gekennzeichnet, dass** die Filteranordnung (30) einen Filter (33) aufweist, der in einem Filterhalter (34) angeordnet ist.

11. Deckel (2) nach einem der Ansprüche 8 und 9 und Anspruch 10, **dadurch gekennzeichnet, dass** das Rückhalteglied (31) auf dem Filterhalter (34) ausgebildet ist.

12. Elektrohaushaltsgerät zum Garen, insbesondere elektrische Fritteuse, umfassend einen Behälter (1) und einen Deckel (2), **dadurch gekennzeichnet, dass** der Deckel (2) mindestens einem der Ansprüche 1 bis 11 entspricht, und dadurch, dass die Dichtung (18) vorgesehen ist, um mit einem oberen Rand (5) des Behälters (1) zusammenzuwirken.

13. Elektrohaushaltsgerät zum Garen nach Anspruch 12, **dadurch gekennzeichnet, dass** der Behälter (1) in einem Gehäuse (3) angeordnet ist.

14. Elektrohaushaltsgerät zum Garen nach Anspruch 13, **dadurch gekennzeichnet, dass** der Deckel (2) schwenkbar auf dem Gehäuse (3) angebracht ist.

15. Elektrohaushaltsgerät zum Garen nach Anspruch 14, **dadurch gekennzeichnet, dass** der Deckel (2) zwei Schwenkglieder (23, 24) umfasst, und dadurch, dass die Öffnung (19) zwischen den zwei Schwenkgliedern (23, 24) angeordnet ist.
